# EUROPEAN PATENT APPLICATION

(11) **EP 0 561 646 A1**
(43) Date of publication of application: **22.09.1993**
(21) Application number: 93302098.4
(22) Date of filing: 19.03.1993
(51) Int. Cl.: B62H 3/08

(54) **Apparatus for use in immobilising a vehicle**

(30) Priority: 19.03.1992 GB 9205999; 16.11.1992 GB 9224027
(71) Applicant: Smith, Max, Surrey Quays, London SE16 1PL (GB)
(72) Inventor: Smith, Max, Surrey Quays, London SE16 1PL (GB)
(74) Representative: Barnard, Eric Edward

(57) **Abstract**

Apparatus for immobilising a vehicle has a base member (12) fixed to a base with bolts (16) and side members (10,11) extending upwardly from the base member (12). A cover plate (13) is hinged to the base member (12) for swinging over the base member (12) to prevent access to the bolts (16). A vehicle wheel is placed between the side members (10,11) and a spindle (17, 45, 48) composed of a shank 17' with relatively rotatable parts (19, 22, 23) is placed through the wheel and into bores (46, 47) in the side members (10,11). A lock (6) is then releasably fitted to the spindle (17) to immobilise the vehicle wheel.

## Description

The present invention relates to apparatus for immobilising a vehicle or a vehicle wheel particularly, but not solely, a motorcycle.

Motorcycles are notoriously easy to steal. Even if the motorcycle is provided with a built-in steering lock or a separate chain or lock preventing a wheel from rotating it is possible for a determined thief to use equipment to lift the motorcycle bodily into a van or the like. Devices are known for immobilising a motorcycle which form an anchor to which a pad lock and chain or a bar can be passed through a wheel and secured. Such devices can really only act as a deterrent to a thief however since with appropriate cutting tools such as an angle grinder the chain and/or the securing device can be attacked and the wheel released.

A general object of the present invention is to provide an improved form of apparatus for immobilising a vehicle such as a motorcycle.

According to the invention there is provided apparatus for use in immobilising a wheeled vehicle, said apparatus comprising a base structure for mounting in a fixed location on a base surface, a pair of side members with apertures therein extending upwardly from the base structure and defining a space therebetween for receiving a wheel of a vehicle and a spindle with relatively rotatable components locatable through the wheel and the apertures in the side members and releasable locking means for locking the spindle in position. The apparatus snugly fits around the vehicle wheel and the spindle being constructed from relatively rotatable components cannot be easily cut or sawn through. The side members are also preferably configured and made from stout sheet steel or similar to also resist attack with cutting or sawing implements.

The base structure is preferably composed of a stout base member releasably fixed to the base surface with fixing elements, such as bolts, and a cover plate pivotably mounted to be swung over the base member to overlie the fixing elements e.g. the bolts. Where the fixing elements are bolts the threaded shanks of the bolts can engage in complementary sockets fixed in the base which is preferably then a prepared concrete layer on hardcore.

The spindle can be an external sleeve rotatably supported by or containing a stack of balls although preference is given to a construction with a central pin surrounded by one or more rotatable sleeves. A shackle or eye piece on one end of the spindle can receive the locking means which is released with a key while a head piece at the other end of the spindle abuts on the outer face of one of the side members.

Preferably the spindle has a central shank composed of a central pin with one or more rotatable sleeves included a resilient split sleeve to resist attack by a bolt cutter.

The central pin is then fitted to disc-like end pieces which may be offset from the axis of the pin. The end pieces can then each be composed of a pair of different sized discs such that one end piece can pass through a larger aperture in one side member in its entirety. One disc of each end piece then fits snugly in a respective aperture so that only one disc lies externally of the side members.

Preferably the side members are of different heights. The side member with the greater height is of sufficient height to block the wheel axle of the vehicle and prevents removal of the axle. The releasable locking means can be protected beneath a top wall of the side member with the lowest height.

The invention may be understood more readily and various other aspects and features of the invention may become more apparent from consideration of the following description.

An embodiment of the invention will now be described by way of example only with reference to the accompanying drawings wherein:

Figure 1 is a perspective exploded view of apparatus constructed in accordance with the invention.

Figure 2 is a plan view of a spindle usable with the apparatus and

Figure 3 is a cross-section of the shank of the spindle taken along the line III-III of Figure 2.

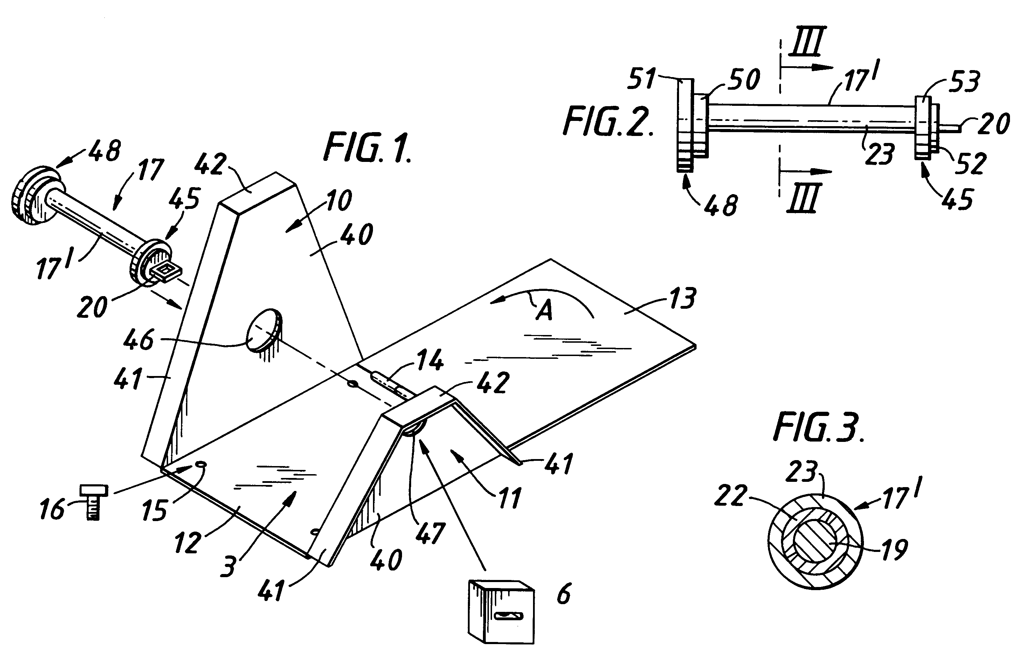

As shown in Figure 1, apparatus in accordance with the invention is composed of first and second side members 10, 11. A base member 12 extends between the side members 10, 11 and joins the lower sides of the side members 10, 11 together. The side members 10, 11 are spaced apart to provide a wheel reception space 3. The side members 10, 11 are formed from sheet material, conveniently steel plate. Each side member 10,11 has a main body portion 40 with outwardly projecting walls 41, 42 around its top and side margins. The sides of the members 10,11 taper inwardly in the upward direction to form a frusto-conical shape and the top walls 42 of the members 10, 11 are flat and extend horizontally. The top wall 42 of the member 10 is located above the top wall 42 of the member 11.

A cover plate 13 is pivotably connected to one end of the base member 12 with the aid of a hinge joint 14. The base member 12 is provided with bores 15 which receive fixing bolts 16. The side members 10, 11 are provided with apertures or bores 46, 47 for receiving a spindle 17. The spindle 17, shown separately in Figures 2 and 3, has a central shank 17' composed of a central hardened steel pin 19 fixed to and extending between shaped end pieces 45,48. An intermediate protective C-shaped or split sleeve 22 rotatably surrounds the pin 19 and a continuous outer sleeve 23 rotatably surrounds the sleeve 22. Each end piece 48, 45 is composed of two disc-shaped blocks 50, 51 and 52, 53 respectively. The blocks 50, 51 and 52, 53 are of different diameters and are eccentric relative to the axis of the pin 19. The smaller block 52 of the end piece 45 has a shackle or eye piece 20 extending outwardly axially of the spindle 17.

The bores 46, 47 are of different sizes to correspond with the blocks 50-53. More particularly the entire end piece 45 can pass through the bore 46 to permit the shank 17' to be positioned to extend between the side members 10, 11. The block 50 and the block 52 are adapted to fit snugly into the respective bores 46, 47 so that when the spindle 17 is fitted the blocks 51 and 53 abut against the outer face of the body position 40 of the side member 10 and against the inner face of the body portion 40 of the side member 11 respectively.

When the spindle 17 is fitted in position the end pieces 45, 48 are not accessible to interference by a thief.

In another construction (not shown) the shank 17' of the spindle 17 has an outer sleeve rotatably supported by or containing a stack of balls.

The base member 12 is laid onto a prepared base, conveniently a bed of concrete laid on hardcore, and the bolts 16 serve to locate in prepared sockets in the base to fix the base member 12 rigidly to the base. The cover plate 13 is then swung in the direction of arrow A to overlie the base member 12 and prevent access to the heads of the bolts 12. The hinge joint 14 lies inwardly of the side members 10, 11 so that it is not accessible to interference by a thief. A wheel of a motorcycle (not shown) but conveniently the rear wheel is then placed in the space 3 between the side members 10, 11 to rest on the cover plate 13. The spindle 17 is inserted through the wheel and engaged in the bores 46, 47 as described above to trap the wheel in place. A lock 6 such as a proprietary "Hercules" padlock by Chubb is then mounted onto the eye piece 20 to fix the spindle 17 in place. The lock 6 can be released when desired with a key, the spindle 17 withdrawn and the wheel can then be moved out of the space 3.

Even if access was not in itself difficult, the rotatable sleeves 22, 23 make it difficult or impossible for a thief to cut through the spindle 17 with a tool such as an angle grinder. The sleeve 22 is best made of hardened spring steel so that the spindle 17 and particularly the centre pin 19 cannot be attacked with a bolt cutter. Similarly the side members 10, 11 are difficult or impossible to cut away. The lock 6 is protected beneath the top wall 42 of the side member 11. The side member 10 is of sufficient height to block access to the axle of the motorcycle wheel to prevent a thief from removing the axle and stealing the rest of the motorcycle. The cover plate 13 and the wheel resting thereon prevent a thief attempting to remove the bolts 16.

The size and relative positions of the components of the apparatus can be varied to conform with different requirements such as types of motorcycle wheels.

In a modified construction, not illustrated the shank 17' of the spindle 17 is not rectilinear as shown but is curved or composed of relatively inclined parts.

As a further safety measure anchoring means, such as a lug on one or both side members, can be used to fix a chain which is locked in around a part of a frame of the vehicle or motorcycle.

## Claims

1. Apparatus for use in immobilising a wheeled vehicle, said apparatus comprising a base structure (12,13) for mounting in a fixed location on a base surface, a pair of side members (10,11) with apertures (46, 47) therein extending upwardly from the base structure and defining a space (3) therebetween for receiving a wheel of a vehicle and a spindle (17) with relatively rotatable components (19, 22, 23) locatable through the wheel and the apertures in the side members and releasable locking means (6) for locking the spindle (17) in position.

2. Apparatus according to claim 1, wherein the base structure is composed of a base plate (12) fitted to the side members (10,11) and fixed to the base surface with removable fixing elements (16) and a displaceable cover plate (13) which can be superimposed on the base plate and on which the vehicle wheel is supported to prevent access to the fixing elements (16).

3. Apparatus according to Claim 2, wherein the cover plate (13) is connected to the base plate (12) with a pivot joint (14) for swinging over the base plate (12) or away from the base plate (12).

4. Apparatus according to Claim 2 or 3 wherein the fixing elements are bolts (16) engageable in complementary sockets fixed in a prepared base defining the base surface.

5. Apparatus according to any one of Claims 1 to 4 wherein the spindle (17) is composed of a pin (19) extending between end pieces (45,48) and one or more rotatable sleeves (22,23) at least partly surrounding the pin.

6. Apparatus according to Claim 5, wherein one of the end pieces (45) can pass entirely through at least the aperture (46) in one of the side members (10) and has a shackle (20) for receiving the locking means (6) and the other of the end pieces (48) is adapted not to pass entirely through the aperture (46).

7. Apparatus according to Claim 6, wherein the apertures (46, 47) in the side members are of different sizes, each end piece (45, 48) is composed of two disc-like blocks (50, 51, 52, 53) also of different size and two of the blocks (50, 52) of the end pieces (45, 48) are adapted to fit snugly into the apertures (46, 47) with the remaining blocks (51, 53) abutting outer and inner faces of the side members (10, 11).

8. Apparatus according to any one of the preceding claims where the side members (10, 11) are of frusto-conical shape with the narrowest portions remote from the base structure (12, 13).

9. Apparatus according to Claim 8, wherein the side members (10,11) extend upwardly from the base structure at different heights with the side member (10) having the greatest height serving to extend alongside an axle of the wheel.

10. Apparatus according to Claim 9, wherein the side members (10,11) each have a main body portion (40) with outwardly extending walls (41,42) around its side and top margins and the top wall (42) of the side member with the lowest height extends in a position to cover and protect the locking means (6).
